# FASCICULE DE BREVET EUROPEEN

(11) **EP 2 635 801 B1**
(45) Date de publication et mention de la délivrance du brevet: **29.10.2014**
(21) Numéro de dépôt: 11799753.6
(22) Date de dépôt: 04.11.2011
(51) Int. Cl.: F03B 13/00, F03B 13/10, F04D 13/00, F03B 13/26, F03B 17/06

(54) **HYDROLIENNE A FLUX TRANSVERSE A ETAGES AUTONOMES**
MARINE QUERSTROMTURBINE MIT AUTONOMEN STUFEN
TRANSVERSE FLOW MARINE TURBINE WITH AUTONOMOUS STAGES

(30) Priorité: 05.11.2010 FR 1059154
(43) Date de publication de la demande: 11.09.2013
(73) Titulaire: Electricité de France, 75008 Paris (FR); Hydroquest, 38400 Saint Martin d'Heres (FR)
(72) Inventeur: JAQUIER, Thomas, F-38100 Grenoble (FR); ACHARD, Jean-Luc, F-38100 Grenoble (FR)
(74) Mandataire: Thibon, Laurent
(86) Numéro de dépôt international: PCT/FR2011/052577
(87) Numéro de publication internationale: WO 2012/059697

(56) Documents cités:
- WO-A2-2006/071689
- DE-A1- 10 065 548
- FR-A1- 2 882 109
- US-A- 4 850 190

## Description

### Domaine de l'invention

La présente invention concerne les turbomachines hydrauliques, ou hydroliennes, à flux transverse constituées d'au moins une colonne de turbines empilées.

### Exposé de l'art antérieur

La demanderesse a déposé un ensemble de demandes de brevet sur des turbomachines hydrauliques à flux transverse parmi lesquelles on peut mentionner :
- la demande de brevet français 04/50209 déposée le 4 février 2004 (B6412) relative à une turbomachine hydraulique à flux transverse comportant une colonne de turbines, chaque turbine comprenant des pales en forme d'ailes volantes en V ;
- la demande de brevet français 05/50420 déposée le 14 février 2005 (B6869) relative à une structure de maintien destinée à rigidifier une colonne de turbines et à éviter sa déformation ; et
- la demande de brevet PCT/FR2008/051917 déposée le 23 octobre 2008 (B8450) relative à une turbomachine constituée d'un assemblage de deux colonnes jumelles tournant en sens inverse.

Ces demandes de brevet, qui seront considérées ici comme connues, décrivent des turbomachines constituées d'au moins une colonne de turbines superposées solidaires d'un arbre commun. Cet arbre commun transmet une force de rotation à une génératrice unique associée à chaque colonne.

Les demandes de brevet 05/50420 et PCT/FR2008/051917 proposent d'utiliser un carénage constitué de deux parois creuses profilées, ou ailes, destinées à concentrer l'écoulement incident vers les turbines et ainsi à augmenter leur rendement. Dans tous les cas décrits ce carénage est monobloc c'est-à-dire qu'un carénage unique est associé à toutes les turbines d'une colonne ou d'un couple de colonnes. De façon connue, l'association d'un tel carénage à une turbine, lorsque les parois sont en forme d'aile, permet, lorsque ce carénage est maintenu symétrique face au courant, de multiplier sensiblement par deux le rendement si la corde de chaque aile a une longueur sensiblement égale à trois fois le diamètre de la turbine.

L'intensité d'un courant marin ou fluvial est susceptible de varier au cours du temps. Or la puissance maximale délivrée par une turbine est obtenue pour une vitesse de rotation des pales motrices qui dépend de la vitesse du courant qui l'atteint. Il a donc été prévu un système de variation de vitesse pour commander dans le temps la vitesse de rotation de l'arbre d'entraînement, identique à la vitesse de rotation de chacune des turbines d'une colonne. Le système de variation de vitesse peut être réalisé à partir d'une mesure de la vitesse amont du courant marin ou fluvial qui atteint la colonne ou directement à partir d'une analyse de la puissance fournie par la colonne.

Outre par son intensité, le courant peut varier dans le temps par son orientation. Ces variations sont observées dans les courants de marée à renversement périodique, c'est-à-dire des marées monodirectionnelles, ainsi que dans les courants de marée tournant sous l'effet de la force de Coriolis pour des profondeurs supérieures à environ 10 mètres. Dans les demandes de brevet 05/50420, et PCT/FR2008/051917 divers moyens ont été proposés pour forcer l'orientation de ces turbomachines, à tout moment et en bloc, selon l'orientation du courant : assistance motorisée, ou autorotation par utilisation d'empennages de type girouette. L'autorotation peut être également assurée en plaçant l'axe de rotation de la turbomachine en amont des deux résultantes de forces qui s'exercent sur chacune des parois creuses profilées et qui passent par leurs centres de poussée respectifs.

A l'exception éventuelle d'un tirant d'eau, toute la hauteur du courant jusqu'au sol marin ou fluvial peut être exploitée par une colonne de turbines. Ces dernières sont donc confrontées à des variations en intensité qui se manifestent inévitablement dans la partie inférieure. Dans la demande de brevet français 05/50420, concernant la variation d'intensité du courant selon la profondeur, il a été prévu de disposer, entre le moyeu de chaque turbine et la portion d'arbre d'entraînement associée, une boîte d'engrenages ou tout autre système permettant de commander la vitesse de rotation des pales motrices. La mise en place d'un tel système au niveau de chaque turbine permet de faire fonctionner chaque turbine d'une colonne de sorte qu'elle fournisse une puissance maximale pour une orientation donnée du courant. Cependant outre en intensité, un courant peut varier suivant la profondeur et également en orientation dans les cas marins où des systèmes de circulation à grande échelle produisent des vents qui peuvent influer sur les courants de marée. Or dans le système évoqué, les carénages forment un bloc associé à toute une colonne et il est par conséquent inenvisageable d'adapter optimalement pour chaque turbine l'orientation du carénage. Enfin ce système n'est modulaire ni dans sa réalisation, ni dans son fonctionnement puisque le blocage d'une turbine entraîne le blocage de la colonne.

La demande de brevet DE-A-10065548 propose, dans le domaine des éoliennes, une turbomachine mono-colonne dans laquelle chaque étage comporte une turbine et une génératrice montées sur un arbre indépendant de celui des autres étages. La mise en place d'un système permettant de commander la vitesse de rotation des pales de chaque turbine permet de faire fonctionner chaque turbine d'une manière optimale du point de vue du rendement mais aussi du maintien de l'ensemble puisque deux étages successifs sont susceptibles de tourner en sens inverse. On soulignera que cette demande de brevet traite d'éoliennes et qu'aucun carénage n'y est prévu.

Toutes ces turbomachines présentent l'un ou l'autre de divers inconvénients et ne conduisent pas à un rendement optimal.

### Résumé

Un objet de modes de réalisation de la présente invention est de prévoir une structure de turbomachine à flux transverse à colonne de turbines cumulant les avantages, a priori incompatibles, de diverses structures antérieures, de façon à optimiser le rendement.

Un autre objet de modes de réalisation de la présente invention est de prévoir une turbomachine de réalisation, d'entretien, de montage et de démontage particulièrement simples.

Un autre objet de modes de réalisation de la présente invention est de prévoir une turbomachine dans laquelle un blocage d'une turbine n'entraîne pas le blocage de l'ensemble d'une colonne.

Un autre objet de modes de réalisation de la présente invention est de prévoir une turbomachine dans laquelle chaque turbine peut tourner à une vitesse adaptée à tout moment de façon optimale à l'intensité effective de la vitesse du courant au niveau de la turbine.

Un autre objet de modes de réalisation de la présente invention est de prévoir une turbomachine dans laquelle chaque turbine peut tourner à une vitesse adaptée à tout moment de façon optimale à l'orientation effective du courant au niveau de la turbine.

Un autre objet de modes de réalisation de la présente invention est de prévoir une turbomachine dont la modularité en hauteur, c'est-à-dire le nombre d'étages de turbines empilés, n'influe pas sur le choix des génératrices, assurant ainsi une plus grande modularité de réalisation.

Pour atteindre ces objets ainsi que d'autres, un mode de réalisation de la présente invention prévoit une turbomachine comprenant un empilement d'étages dont chacun comprend une turbine à flux transverse et une génératrice, dans laquelle chaque étage turbine-génératrice a un arbre indépendant, et dans laquelle chaque étage est associé à un carénage indépendant l'orientant par rapport à un courant, chaque carénage étant du type diffuseur, à ailes profilées symétriques.

Selon un mode de réalisation de la présente invention, les génératrices des divers étages sont interconnectées par l'intermédiaire de redresseurs.

Selon un mode de réalisation de la présente invention, la sortie de chaque redresseur est couplée à un moyen de charge indépendant pour contrôler la vitesse de rotation de la génératrice associée ou la bloquer.

Selon un mode de réalisation de la présente invention, deux étages adjacents sont conçus pour que leurs turbines tournent en sens opposé.

Selon un mode de réalisation de la présente invention, chaque étage est couplé aux étages voisins par des moyens commandés fixant l'orientation mutuelle des étages.

Selon un mode de réalisation de la présente invention, chaque étage turbine-génératrice-carénage constitue un module indépendant empilable in situ sur un autre module.

Selon un mode de réalisation de la présente invention, chaque module comprend un châssis comprenant les deux parois d'un carénage de type diffuseur, associé à une plaque supérieure et une plaque inférieure ; un premier carter fixé à la plaque inférieure et contenant la génératrice ; et une troisième plaque montée à rotation par rapport à la plaque inférieure, sous le carter, cette troisième plaque étant munie de moyens de fixation à un module inférieur.

Selon un mode de réalisation de la présente invention, les moyens de fixation comprennent des broches enfichables dans un module inférieur.

Selon un mode de réalisation de la présente invention, chaque étage comprend un couple de turbines contra-rotatives, chaque turbine étant associée à une génératrice contenue dans un carter, chaque turbine étant séparée l'une de l'autre par une forme profilée symétrique s'étendant en aval au moins jusqu'au bord de fuite, chaque étage étant séparé des étages voisins par une plaque supérieure et une plaque inférieure s'étendant à partir de la forme profilée jusqu'aux carénages.

Selon un mode de réalisation de la présente invention, les pales de chaque turbine sont du type à ailes volantes en V.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1A est une vue en perspective d'un exemple de turbomachine à colonne unique ;
la figure 1B est une vue en perspective d'un étage de la turbomachine de la figure 1A ;
la figure 1C est une vue en coupe axiale d'un étage de la turbomachine de la figure 1A ;
la figure 2A est une vue en perspective d'un exemple de turbomachine à colonne unique ;
la figure 2B est une vue de dessus simplifiée, en coupe d'une turbine de la figure 2A ;
la figure 2C est une vue en coupe d'un mode de réalisation d'un étage de la turbomachine de la figure 2A ;
la figure 2D est une vue en coupe d'un autre mode de réalisation d'un étage de la turbomachine de la figure 2A ;
la figure 3A est une vue en perspective d'un exemple de turbomachine à deux colonnes jumelles ;
la figure 3B est une vue en perspective d'un étage de la turbomachine de la figure 3A ; et
la figure 4 est une vue en perspective d'un exemple de turbomachine à deux colonnes jumelles.

### Description détaillée

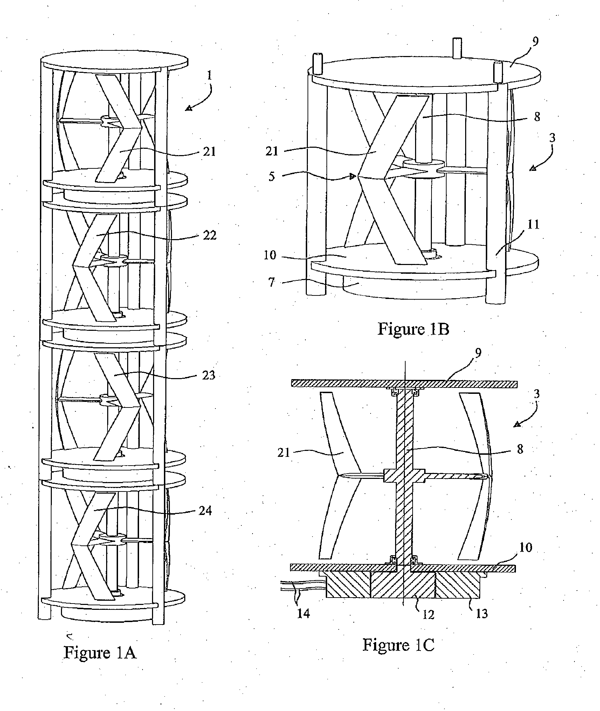

Les figures 1A, 1B et 1C sont des vues simplifiées représentant respectivement une turbomachine hydraulique à flux transverse à colonne unique, une vue en perspective d'un étage de cette turbomachine et une vue en coupe partielle d'un étage de cette turbomachine. Ces vues sont simplifiées en ce que, notamment, elles ne représentent pas les moyens de fixation ni de connexion de la turbomachine. La turbomachine 1 est constituée d'un assemblage d'étages 3 dans lequel chaque étage comprend une turbine à flux transverse 5 et une génératrice 7. Chaque turbine élémentaire est par exemple du type décrit dans la demande de brevet 04/50209 (B6412) et est solidaire d'un arbre 8 monté à rotation entre des flasques supérieur et inférieur 9 et 10 liés par des montants 11. Les arbres des divers étages turbine-génératrice sont indépendants les uns des autres. Chaque arbre 8 entraîne le rotor 12 d'une génératrice 7, ce rotor tournant à l'intérieur d'un stator 13 qui fournit une alimentation électrique par des conducteurs 14.

Les conducteurs 14 des diverses génératrices sont connectés entre eux, directement en parallèle, ou par tout autre moyen de connexion adapté à fournir une alimentation électrique quand les turbines de la turbomachine sont entraînées en rotation. On peut prévoir d'associer un redresseur à la sortie de chaque génératrice pour permettre des contrôles indépendants spécifiques de chacune des génératrices en couple et/ou en vitesse de rotation. Les différents redresseurs sont ensuite connectés en parallèle sur un bus continu. Pour la connexion au réseau, un seul onduleur est nécessaire, placé après le bus continu.

Par ailleurs, les turbines adjacentes d'une même colonne sont de préférence conçues pour tourner en sens opposé quand un courant marin ou fluvial agit sur la colonne. Par exemple, dans l'exemple de réalisation de la figure 1A, les pales 21, 22, 23, 24 des turbines adjacentes sont orientées de façons différentes, de sorte que les turbines comprenant les pales 21 et 23 tournent dans un premier sens et que les turbines comprenant les pales 22 et 24 tournent en sens opposé. Ceci entraîne que, quand la colonne est soumise à l'action d'un courant hydraulique, elle est seulement soumise à une force de traînée qui tend à lui conférer une flexion dans le sens du courant. Etant donné la rotation en sens inverse de deux turbines adjacentes de la colonne, les forces de portance orthogonales à la direction du courant s'annulent mutuellement, ou sont à tout le moins fortement réduites. On réduit en outre le moment de basculement latéral résultant de la somme des moments associés aux forces de portance de chaque turbine.

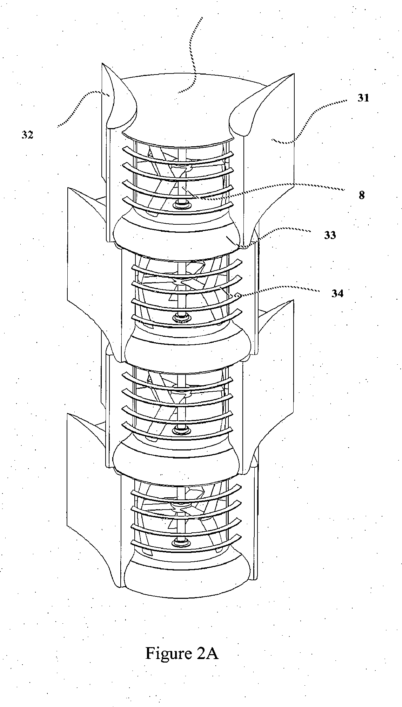

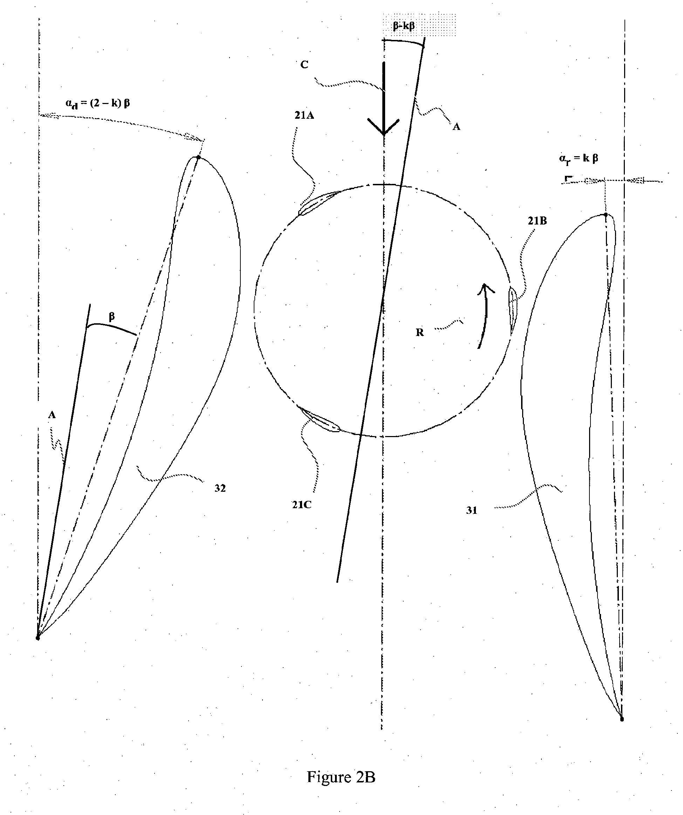

Les figures 2A et 2B sont respectivement une vue en perspective d'un exemple de turbomachine à flux transverse mono-colonne et une vue de dessus schématique d'une turbine et de son carénage associé.

La turbomachine comporte les mêmes éléments que ceux des figures 1A à 1C qui ne seront pas décrits à nouveau. En outre, chaque étage constitue un module autonome comprenant une turbine, une génératrice et un châssis. Ce châssis comprend un carénage constitué des deux parois verticales profilées et symétriques (ou ailes) 31, 32, une plaque supérieure 41 et une plaque inférieure, non visible sur la figure 2A. Un élément de carénage inférieur 33 protège la génératrice. Des éléments de protection 34 sont destinés à éviter tout choc entre les pales des turbines et d'éventuels corps entraînés par le courant venant actionner la turbine. L'ensemble de la turbomachine est monté d'une façon non représentée sur une structure d'assise de façon que l'étage inférieur puisse tourner librement en rotation autour d'un axe vertical.

La vue de dessus de la figure 2B représente schématiquement trois pales 21A, 21B et 21C d'une turbine et deux ailes profilées 31, 32 du carénage associé. La direction A correspond à l'axe de symétrie du module et la flèche C indique la direction du courant. Chaque aile 31, 32 a une corde dont l'inclinaison par rapport à l'axe de symétrie est définie par un angle β. Cet angle β est compris entre une valeur de l'incidence proche de l'incidence critique α_{C} (décrochement), c'est-à-dire sensiblement entre 10° et 25° et une inclinaison tiers de celle-ci. Il faut entendre ici décrochement en présence de la turbine dans le diffuseur qui peut être différent du décrochement pour un profil isolé ou un couple de profils en regard. Comme on l'a indiqué, l'association d'un tel carénage indépendant à chaque étage ouvre la possibilité d'optimiser le fonctionnement du système.

Ainsi, si on appelle β-kβ l'angle entre la direction du courant et l'axe de symétrie du système, et si la turbine tourne dans la direction indiquée par la flèche R, l'angle αᵣ entre la corde de l'aile à la remontée au courant et la direction C du courant est égal à kβ et l'angle α_{d} entre la corde de l'aile à la descente au courant et la direction C du courant est égal à (2-k)β. L'orientation optimale du carénage est celle dans laquelle la paroi profilée correspondant à la remontée du courant par les pales, se trouve avec une incidence αᵣ inférieure à β (correspondant à une fraction kβ de β, la valeur k dépendant du profil choisi, de la vitesse incidente du courant et de la vitesse de rotation de la machine). Dans une telle orientation chaque pale est confrontée à une survitesse (voire une sous-vitesse si k<0 par rapport à la vitesse incidente) plus faible lors de sa remontée que si αᵣ=β. D'un autre côté, la paroi profilée correspondant à la descente par les pales doit se trouver avec une incidence α_{d}=(2-k)β supérieure à β, proche mais inférieure à α_{c}. La survitesse est par conséquent plus forte, lors de sa descente, que si α_{d}=β. Dans le cas de l'art antérieur d'une tour (une colonne d'étages) comportant un carénage monobloc plongée dans un écoulement non uniforme en direction, certains étages, à l'inverse, présenteront une forte chute de rendement (qui peut atteindre 50 %) si l'incidence αᵣ se trouve être plus forte que β de 5 à 10 degrés d'écart.

L'orientation naturelle (passive) du carénage d'un module indépendant est proche d'une situation symétrique, face au courant, αᵣ # α_{d} < β pour des valeurs ordinaires du paramètre d'avance (entre 2 et 5), rapport entre la vitesse d'un bout de pale et la vitesse du courant. Cette orientation naturelle conduit à un rendement proche, à mieux que 20 % près, du rendement correspondant à une orientation optimale. On se rapproche ainsi du rendement optimal de la turbine et l'on voit l'intérêt d'étages indépendants libres en rotation. Il est enfin avantageux dans ce cas que β soit proche de α_{c} : plus le diffuseur est ouvert, plus l'accélération du fluide dans celui-ci est importante (limitée seulement par la cavitation) et plus l'énergie prélevée est grande.

Selon une variante de la présente invention, au lieu de prévoir des étages libres en rotation les uns par rapport aux autres, on pourra prévoir de lier chaque étage à un étage adjacent par un système motorisé permettant d'imposer, ou d'ajuster, le décalage angulaire entre deux étages. Ainsi, la situation d'orientation passive peut être avantageusement modifiée par une orientation forcée qui corresponde à tout moment et pour chaque étage à l'orientation optimale. Un tel asservissement se combine alors à celui de la vitesse de rotation de la turbine.

L'utilisation d'étages turbine-génératrice-carénage, est particulièrement intéressante et, outre des gains de rendement, présente plusieurs avantages parmi lesquels on peut noter les points suivants.
- Chaque aile de carénage peut être allégée par rapport aux systèmes antérieurs dans lesquels une grande aile doit supporter les efforts de la structure.
- Il devient possible de lisser dans le temps les efforts sur les structures de maintien lors d'un retournement de marée, les étages tournant l'un par rapport à l'autre avec un certain décalage angulaire, ce qui évite des à-coups de repositionnement. La structure de maintien d'une colonne constituée par le couplage des châssis empilés peut alors être plus légère. En effet, elle doit résister seulement à des efforts de flexion dans une direction donnée et non pas, en outre, à des efforts variables orthogonaux à cette direction.
- Les turbines adjacentes d'une même colonne peuvent être conçues pour tourner en sens opposé quand un courant marin ou fluvial agit sur la colonne. Etant donné la rotation en sens inverse de deux turbines adjacentes de la colonne, les forces de portance orthogonales à la direction du courant qui s'exercent sur les châssis couplés entre eux s'annulent mutuellement, ou sont à tout le moins fortement réduites.

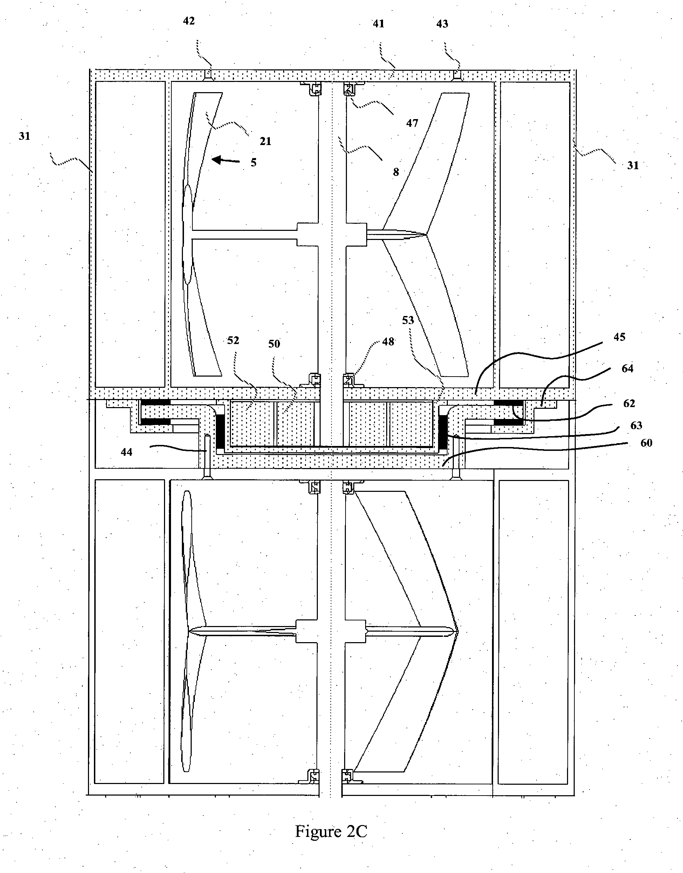

La figure 2C est une vue en coupe illustrant un exemple d'un étage turbine-génératrice-châssis utilisable dans la structure de la figure 2A. Cette structure ne correspond pas exactement à la vue en coupe de la figure 2A mais illustre certaines variantes qui apparaîtront clairement à l'homme de l'art.

Les deux ailes 31, 32 du carénage sont reliées par une plaque supérieure 41. Cette plaque comprend des ouvertures 42, 43 destinées à recevoir des vis d'assemblage 44 avec un étage voisin. Les deux ailes sont également reliées par une plaque inférieure 45. L'arbre 8 de la turbine 5 est monté à pivotement sur des paliers 47, 48 respectivement solidaires de la plaque supérieure 41 et de la plaque inférieure 45. L'arbre 8 est lié au rotor 50 d'une génératrice disposée du côté de la plaque 45 opposé à la turbine. Le stator 52 de la génératrice est fixé, par exemple par l'intermédiaire d'un carter 53, à la plaque 45. Une deuxième plaque 60 est montée libre en rotation dans un plan parallèle à celui de la plaque 45. L'articulation entre la plaque 60 et la plaque 45 est à titre d'exemple réalisée par deux paliers circulaires 62, 63 respectivement montés sur le fond de la plaque 45 et sur la paroi latérale du carter 53.

Bien entendu, de nombreuses variantes de réalisation sont possibles, l'important étant qu'il y ait liberté de rotation entre le carénage d'un étage et l'étage sous-jacent.

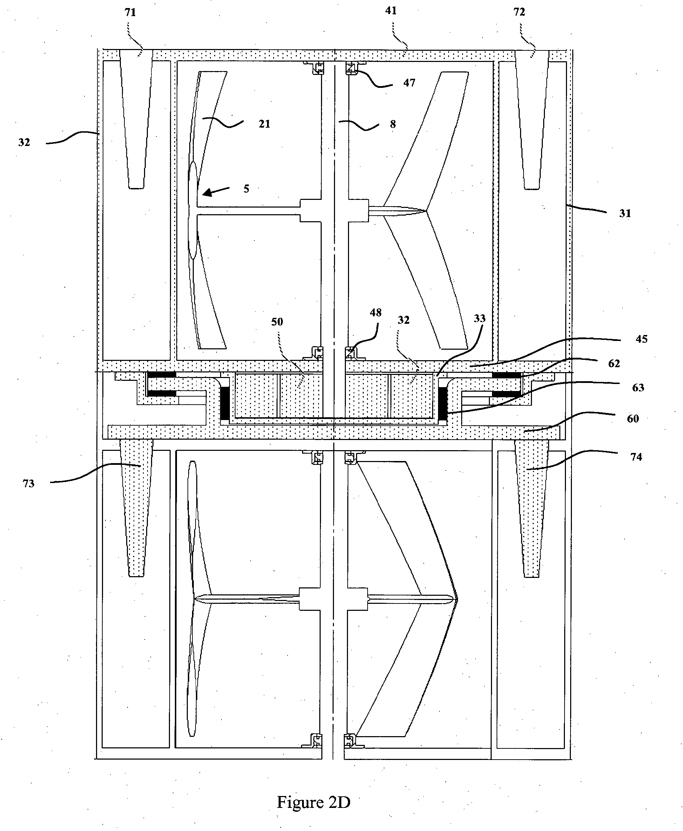

La figure 2D est une vue en coupe illustrant un autre exemple d'un étage turbine-génératrice-carénage utilisable dans la structure illustrée en figure 2A. Alors que la structure de la figure 2C est destinée à être assemblée avant immersion (en raison de la présence des vis ou boulons 44), la structure de la figure 2C est destinée à être assemblée in situ, étage par étage. On retrouve en figure 2D les mêmes éléments qu'en figure 2C désignés par les mêmes références. En ce qui concerne le mode d'assemblage, les ouvertures 42, 43 et les vis d'assemblage 44 sont remplacées par des ouvertures 71, 72 et des broches 73, 74. Ainsi, la structure peut être assemblée in situ, étage par étage.

Parmi les avantages des modes de réalisation des figures 2C et 2D, on notera l'existence de plaques séparant deux étages adjacents. Ceci évite que des écoulements turbulents créés par la rotation d'éléments d'un étage ne se propagent vers un étage adjacent.

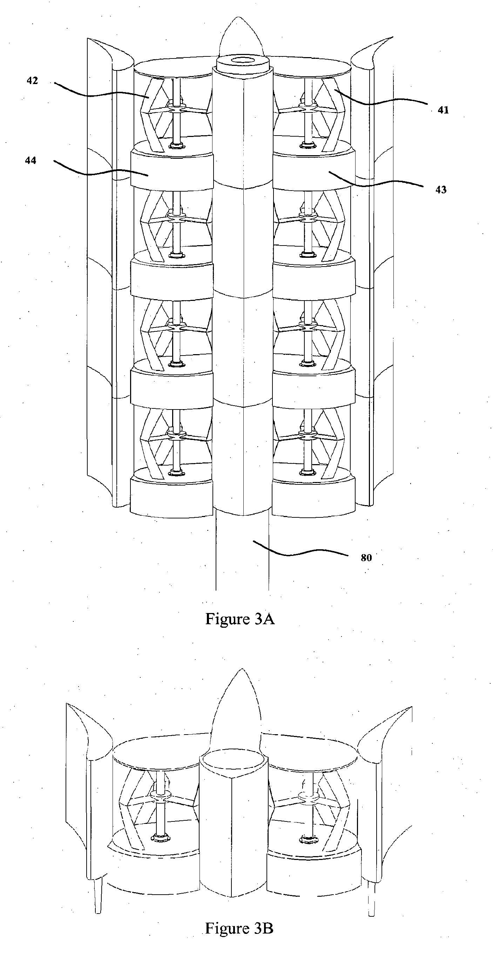

Les figures 3A et 3B sont des vues en perspective d'une turbomachine à colonnes jumelles et d'un étage d'une telle turbomachine. Pour la conception d'une telle structure et la réalisation de diverses variantes, on pourra se référer à la demande de brevet PCT/FR2008/051917 susmentionnée. Dans l'exemple représenté, les divers éléments du carénage sont fixes les uns par rapport aux autres et l'ensemble est mobile en rotation autour d'un pieu 80 qui est par exemple monté à rotation sur une embase fixe.

Dans cette réalisation, les éléments d'une colonne tournent en sens opposé des éléments de la colonne adjacente pour supprimer les forces de portance sur l'ensemble de la structure. Chaque étage comprend un couple de turbines 41, 42, associé à un couple de génératrices 43, 44.

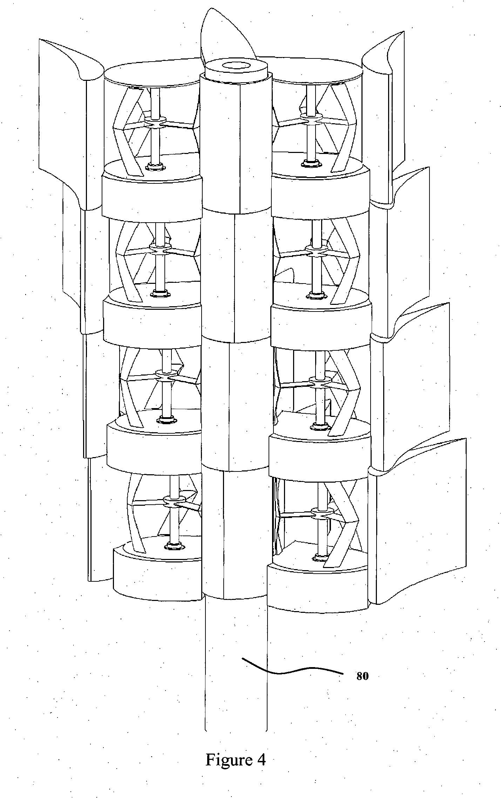

La figure 4 représente une turbomachine à plusieurs étages turbines-génératrices-carénage à colonnes jumelles constituant une modification avantageuse de la structure de la figure 3A. Les carénages de chacun des étages sont indépendants des carénages des autres étages. Chaque étage est articulé par rapport à l'étage supérieur par un pieu (non représenté) qui traverse tous les étages au niveau de la paroi médiane et qui est fixé à une assise. Le pieu bloque les déplacements radiaux et axiaux. La liberté en rotation est assurée entre les étages par des paliers de butée autour du pieu.

En figure 4, on a représenté un exemple dans lequel l'orientation du courant varie entre le fond et la partie supérieure de la structure. On a supposé que le courant varie régulièrement. En conséquence, chacun des étages est décalé en orientation dans le même sens par rapport à l'étage précédent. Pour une telle turbomachine à plusieurs étages turbines-génératrices-carénage à colonnes jumelles, et à la différence d'une turbomachine mono-colonne :
- l'orientation naturelle (passive) du carénage est exactement la situation symétrique "face au courant",
- l'orientation optimale du carénage est exactement l'orientation naturelle du carénage.

On a décrit ici des étages dont chacun comprend une turbine, une génératrice et un carénage, ces étages étant empilables et assemblables de diverses manières. On a décrit des modes de réalisation particuliers de turbines, de génératrices et de carénages. L'homme de l'art comprendra que l'on peut apporter de nombreuses variantes à la réalisation de chacun de ces éléments, dont des exemples peuvent être trouvés notamment dans les demandes de brevet antérieures de la demanderesse, mais sans que ceci soit limitatif.

Les structures à empilements d'étages turbinegénératrice-carénage décrites ci-dessus présentent en combinaison les caractéristiques et avantages ci-après.
1. Commodité de montage/démontage : chaque étage de turbines est facilement enfichable sur un autre étage. De plus, les étages turbine-génératrice-carénage décrits ici permettent de former une turbomachine facilement démontable et transportable dont chaque étage a un poids équivalent qui, dans des réalisations pratiques, n'excédera pas une valeur de l'ordre de 2 à 5 tonnes.
2. Autonomie électrique au regard à la fois de la conversion électrique (une génératrice par turbine) et du pilotage de la vitesse de rotation en fonction de la valeur de la vitesse incidente à l'étage considéré, de façon à obtenir le rendement optimal (un système d'asservissement par étage). Une telle indépendance permet de traduire une inhomogénéité en altitude de l'intensité de la vitesse. Il résulte de cette autonomie qu'il est possible, si nécessaire, par exemple en cas de défaillance d'une turbine, de freiner, par exemple en la surchargeant électriquement, la génératrice d'une turbine adjacente ou voisine. Il est enfin possible d'adapter le nombre d'étages en fonction du site d'implantation sans revoir la génératrice.
3. Autonomie mécanique : en cas de blocage d'une turbine, les autres turbines de la même colonne restent actives, éventuellement en prenant la précaution mentionnée au point 2 ci-dessus.
4. Indépendance de fonctionnement hydrodynamique : il n y a pas d'interaction entre deux turbines superposées, entre une turbine et son arbre, entre une génératrice et une turbine etc., qui soit nuisible aux performances de chaque étage, grâce au plaques séparant des étages voisins.
5. Stabilité dynamique de l'assemblage des étages vis-à-vis des vibrations induites par les forces de portance, et des phénomènes de résonance qui pourraient en résulter, grâce à l'inversion de sens de rotation entre étages d'une colonne, dans le cas d'une machine mono-colonne.
6. Stabilité statique de l'assemblage des étages vis-à-vis des forces de trainée qui tendent à fléchir la colonne dans le sens du courant, voire à emporter la turbomachine avec le courant. Les moments de basculement induits par ces forces sont beaucoup plus importants que ceux des forces de portance ; ils peuvent se révéler délicats à équilibrer lorsque l'on cherche à introduire les critères 1), 3), ainsi que le critère 7) ci-après.
7. Optimisation de l'orientation des étages : d'importants gains (doublement au moins) de performances sont réalisés par l'utilisation de diffuseurs, si ces diffuseurs entraînent une orientation optimale de chaque étage par rapport à la direction du courant.

La présente invention est susceptible de nombreuses variantes et modifications qui apparaîtront à l'homme de l'art qui pourra notamment adapter diverses variantes décrites dans les publications antérieures des inventeurs.

On a décrit le cas où deux turbines adjacentes d'une turbomachine tournent en sens inverse. On pourra aussi prévoir des groupements différents de turbines tournant en sens inverse.

Enfin, la présente invention a été décrite dans le cas de turbomachines fonctionnant dans des courants liquides (hydroliennes). On pourra adapter la présente invention à des turbomachines fonctionnant dans des courants gazeux (éoliennes).

## Revendications

1. Turbomachine comprenant un empilement d'étages (3) dont chacun comprend une turbine à flux transverse (5) et une génératrice (7), dans laquelle chaque étage turbine-génératrice a un arbre indépendant (8), et dans laquelle chaque étage est associé à un carénage (31-32) indépendant l'orientant par rapport à un courant, chaque carénage étant du type diffuseur, à ailes profilées symétriques.

2. Turbomachine selon la revendication 1, dans laquelle les génératrices des divers étages sont interconnectées par l'intermédiaire de redresseurs.

3. Turbomachine selon la revendication 2, dans laquelle la sortie dé chaque redresseur est couplée à un moyen de charge indépendant pour contrôler la vitesse de rotation de la génératrice associée ou la bloquer.

4. Turbomachine selon l'une quelconque des revendications 1 à 3, dans laquelle deux étages adjacents sont conçus pour que leurs turbines tournent en sens opposé.

5. Turbomachine selon l'une quelconque des revendications 1 à 4, dans laquelle chaque étage est couplé aux étages voisins par des moyens commandés fixant l'orientation mutuelle des étages.

6. Turbomachine selon l'une quelconque des revendications 1 à 5, dans laquelle chaque étage turbine-génératrice-carénage constitue un module indépendant empilable in situ sur un autre module.

7. Turbomachine selon l'une quelconque des revendications 1 à 6, dans laquelle chaque module comprend :
un châssis comprenant les deux parois d'un carénage de type diffuseur (31, 32), associé à une plaque supérieure (41) et une plaque inférieure (45),
un premier carter (53) fixé à la plaque inférieure et contenant la génératrice, et
une troisième plaque (60) montée à rotation par rapport à la plaque inférieure, sous le carter, cette troisième plaque étant munie de moyens de fixation à un module inférieur.

8. Turbomachine selon la revendication 7, dans laquelle les moyens de fixation comprennent des broches (65, 66) enfichables dans un module inférieur.

9. Turbomachine selon l'une quelconque des revendications 1 à 6, dans laquelle chaque étage comprend un couple de turbines contra-rotatives, chaque turbine étant associée à une génératrice contenue dans un carter (53), chaque turbine étant séparée l'une de l'autre par une forme profilée symétrique s'étendant en aval au moins jusqu'au bord de fuite, chaque étage étant séparé des étages voisins par une plaque supérieure et une plaque inférieure s'étendant à partir de la forme profilée jusqu'aux carénages.

10. Turbomachine selon l'une quelconque des revendications 1 à 9, dans laquelle les pales de chaque turbine sont du type à ailes volantes en V (21-24).

## Patentansprüche

1. Eine Turbomaschine mit einer Reihe (einem Stapel) von Stufen (3), deren jede eine Querströmungsturbine (5) und einen Generator (7) aufweist, wobei jede Turbinen-Generator-Stufe eine unabhängige Welle (8) besitzt, und wobei jede Stufe mit einer unabhängigen Verkleidung (31-32) assoziiert ist, die dieselbe bezüglich einer Strömung orientiert, wobei jede Verkleidung zur Diffusor-Bauart mit symmetrisch profilierten Flügeln gehört.

2. Turbomaschine nach Anspruch 1, wobei die Generatoren der verschiedenen Stufen über Gleichrichter verbunden sind.

3. Turbomaschine nach Anspruch 2, wobei der Ausgang jedes Gleichrichters mit unabhängigen Ladungsmitteln gekoppelt ist, und zwar zur Steuerung der Drehzahl des zugehörigen Generators oder zu dessen Blockierung.

4. Turbomaschine nach einem der Ansprüche 1 bis 3, wobei zwei benachbarte Stufen derart ausgelegt sind, dass ihre Turbinen in entgegengesetzten Richtungen rotieren.

5. Turbomaschine nach einem der Ansprüche 1 bis 4, wobei jede Stufe mit den benachbarten Stufen durch gesteuerte Mittel gekuppelt ist, die die gegenseitige Orientierung der Stufen einstellen.

6. Turbomaschine nach einem der Ansprüche 1 bis 5, wobei jede Turbogenerator-Verkleidungs-Stufe ein unabhängiges Modul bildet, welches an Ort und Stelle auf ein anderes Modul stapelbar ist.

7. Turbomaschine nach einem der Ansprüche 1 bis 6, wobei jedes Modul folgendes aufweist:
einen Rahmen der die zwei Wände einer Verkleidung (31, 32) des Diffusor-Typs aufweist, und zwar assoziiert mit einer oberen Platte (41) und einer unteren Platte (45),
ein erstes Gehäuse (53) angebracht an der unteren Platte und den Generator enthaltend, und
eine dritte Platte (60) drehbar angeordnet bezüglich der unteren Platte unter dem Gehäuse, wobei diese dritte Platte mit Mitteln zur Befestigung an einem unteren Modul versehen ist.

8. Turbomaschine nach Anspruch 7, wobei die Befestigungsmittel Stifte (65, 66) aufweisen, die in ein unteres Modul einsetzbar sind.

9. Turbomaschine nach einem der Ansprüche 1 bis 6, wobei jede Stufe ein Paar von entgegengesetzt rotierenden Turbinen aufweist, wobei jede Turbine mit einem Generator assoziiert ist, der in einem Gehäuse (53) enthalten ist, und wobei jede Turbine von der anderen Turbine durch ein symmetrisch profiliertes Teil getrennt ist, welches sich stromabwärts mindestens den gesamten Weg bis zur nacheilenden Kante erstreckt, wobei jede Stufe von den benachbarten Stufen durch eine obere Platte und eine untere Platte getrennt ist, die sich von dem erwähnten Teil den ganzen Weg bis zu den Verkleidungen erstreckt.

10. Turbomaschine nach einem der Ansprüche 1 bis 9, wobei die Schaufeln jeder Turbine solche der V-Flügelbauart (21-24) sind.

## Claims

1. A turbine engine comprising a stack of stages (3), each of which comprises a cross-flow turbine (5) and a generator (7), wherein each turbine-generator stage has an independent shaft (8), and wherein each stage is associated with an independent fairing (31-32) orientating it with respect to a current, each fairing being of diffuser type, with symmetrical profiled wings.

2. The turbine engine of claim 1, wherein the generators of the various stages are interconnected via rectifiers.

3. The turbine engine of claim 2, wherein the output of each rectifier is coupled to independent charge means for controlling the rotation speed of the associated generator or blocking it.

4. The turbine engine of any of claims 1 to 3, wherein two adjacent stages are designed so that their turbines rotate in opposite directions.

5. The turbine engine of any of claims 1 to 4, wherein each stage is coupled to the neighboring stages by controlled means setting the mutual orientation of the stages.

6. The turbine engine of any of claims 1 to 5, wherein each turbine-generator-fairing stage forms an independent module stackable in situ on another module.

7. The turbine engine of any of claims 1 to 6, wherein each module comprises:
a frame comprising the two walls of a diffuser-type fairing (31, 32), associated with an upper plate (41) and a lower plate (45),
a first housing (53) attached to the lower plate and containing the generator, and
a third plate (60) rotatably assembled with respect to the lower plate, under the housing, this third plate being provided with means of attachment to a lower module.

8. The turbine engine of claim 7, wherein the attachment means comprise pins (65, 66) insertable into a lower module.

9. The turbine engine of any of claims 1 to 6, wherein each stage comprises a couple of contra-rotating turbines, each turbine being associated with a generator contained in a housing (53), each turbine being separated from the other by a symmetrically profiled piece extending downstream at least all the way to the trailing edge, each stage being separated from the neighboring stages by an upper plate and a lower plate extending from said piece all the way to the fairings.

10. The turbine engine of any of claims 1 to 9, wherein the blades of each turbine are of V-shaped wing type (21-24).
